# EUROPÄISCHE PATENTANMELDUNG

(11) **EP 2 660 690 A1**
(43) Veröffentlichungstag der Anmeldung: **06.11.2013**
(21) Anmeldenummer: 12166619.2
(22) Anmeldetag: 03.05.2012
(51) Int. Cl.: G06F 3/044, H03K 17/96

(54) **Kombinierte Bedien- und Anzeigeeinheit für ein Automatisierungsgerät und Automatisierungsgerät mit einer solchen Bedien- und Anzeigeeinheit**

(71) Anmelder: Siemens Aktiengesellschaft, 80333 München (DE)
(72) Erfinder: Moniac, Sven, 91056 Erlangen (DE)

(57) **Zusammenfassung**

Die Erfindung betrifft eine kombinierte Bedien- und Anzeigeeinheit (10) für ein Automatisierungsgerät sowie ein Automatisierungsgerät mit einer solchen Bedien- und Anzeigeeinheit (10), wobei die Bedien- und Anzeigeeinheit (10) eine einen ersten und einen zweiten Bereich (18, 20) umfassende Bedienfläche (16) aufweist, wobei der erste Bereich (18) der Bedienfläche (16) Tasten (22) aufweist und im zweiten Bereich (20) der Bedienfläche (16) eine von einem Benutzer beeinflussbare Darstellung einblendbar ist und beide Bereiche (18, 20) der Bedienfläche (16) für Bedienhandlungen sensitiv sind.

## Beschreibung

Die Erfindung betrifft eine im Folgenden kurz nur als Bedieneinheit bezeichnete kombinierte Bedien- und Anzeigeeinheit für ein Automatisierungsgerät. Der Begriff Automatisierungsgerät umfasst dabei einfache Geräte nach Art eines sogenannten Operator Panels wie auch komplexe Geräte in Form sogenannter Bearbeitungszentren, zum Beispiel numerisch gesteuerten Werkzeugmaschinen, Programmiereinrichtungen für solche Werkzeugmaschinen, Roboter, etc., und dergleichen oder auch sogenannte Industrie-PCs, um nur einige zu nennen. Die Erfindung betrifft im Weiteren auch ein derartiges Automatisierungsgerät mit einer solchen Bedieneinheit.

Kombinierte Bedien- und Anzeigeeinheiten sind an sich bekannt. Bei einem sogenannten Industrie-PC, der selbst als Automatisierungsgerät oder als Steuerungseinheit in einem Automatisierungsgerät, nämlich zum Beispiel einer numerisch gesteuerten Werkzeugmaschine, fungieren kann, weist dieses eine zweigeteilte Bedienfläche, nämlich einerseits ein Tastenfeld und andererseits einen Monitor oder eine ähnliche Anzeigeeinrichtung auf.

Zur Realisierung solcher Tastenfelder sind unterschiedliche Möglichkeiten bekannt. Zum einen können die Tasten als mechanisch betätigbare Tasten wie auf einer Tastatur ausgeführt sein. Zum anderen können die Tasten bei einer alternativen Ausführungsform eines Tastenfeldes auch in Form einer sogenannten Folientastatur realisiert sein. Jüngst ist bei sogenannten Smartphones die Verwendung sogenannter Touchscreens bekannt geworden, die auf einem kapazitiven Wirkprinzip beruhen und auf diese Weise eine Identifikation von Bedienhandlungen als Betätigung einzelner Tasten erlauben. Solche Touchscreens sind einerseits für Bedienhandlungen sensitiv und erlauben andererseits die graphische Darstellung von Symbolen oder dergleichen, die der Benutzer als Darstellung zum Beispiel einer Taste wahrnimmt, so dass bei einer Bedienhandlung durch Berührung des Touchscreens der Benutzer den Eindruck einer Betätigung einer dort dargestellten Taste erhält. Zum Stand der Technik kann insoweit auf die US 7,663,607 B verwiesen werden.

Eine Aufgabe der Erfindung besteht darin, eine weitere Ausführungsform einer kombinierten Bedien- und Anzeigeeinheit für ein Automatisierungsgerät anzugeben, insbesondere eine solche Bedieneinheit mit einer zweigeteilten, einen ersten und einen zweiten Bereich umfassenden Bedienfläche, bei der sich die beiden Bereiche der Bedienfläche und die Bedienfläche selbst für einen Benutzer der Bedieneinheit als eine Einheit darstellen beziehungsweise darstellt.

Diese Aufgabe wird mittels einer kombinierten Bedien- und Anzeigeeinheit für ein Automatisierungsgerät mit den Merkmalen des Anspruchs 1 gelöst. Die Bedien- und Anzeigeeinheit umfasst eine Bedienfläche mit einem ersten und einem zweiten Bereich, wobei der erste Bereich der Bedienfläche Tasten aufweist und im zweiten Bereich der Bedienfläche eine von einem Benutzer beeinflussbare Darstellung einblendbar ist. Dabei sind beide Bereiche der Bedienfläche für Bedienhandlungen sensitiv.

Der Vorteil der Erfindung besteht darin, dass die Bedienfläche für den Benutzer als Einheit erscheint, wenn beide Bereiche der Bedienfläche für Bedienhandlungen sensitiv sind. Für den Benutzer des Bediengerätes ist die Haptik in beiden Bereichen der Bedienfläche gleich. Für den Benutzer ist das Bediengerät damit zudem intuitiv bedienbar. Dies ist ein wichtiger Unterschied zu bisherigen Bedieneinheiten, die im ersten Bereich der Bedienfläche zum Beispiel eine mechanische Tastatur und im zweiten Bereich der Bedienfläche ein Anzeigeelement mit einem dort dargestellten und zum Beispiel mit einer Maus oder dergleichen beweglichen Cursor aufweisen. Bei einer solchen Bedieneinheit ist die Haptik beider Bereiche der Bedienfläche unterschiedlich und wenn eine Tastatur normalerweise noch vergleichsweise intuitiv bedienbar ist, muss der Benutzer wissen, dass er zur Vornahme von Bedienhandlungen im zweiten Bereich der Bedienfläche die jeweilige Zeigeeinrichtung, also zum Beispiel die Maus, einen Trackball oder dergleichen, betätigen muss.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform der Bedieneinheit ist vorgesehen, dass beide Bereiche der Bedienfläche eine gleichartige Sensorik zum Sensieren von Bedienhandlungen aufweisen. Eine gleichartige Sensorik für beide Bereiche der Bedienfläche vereinfacht die Bedieneinheit.

Bei einer besonderen Ausführungsform der Bedieneinheit ist vorgesehen, dass als Bedienfläche eine durchgehende, transparente Scheibe fungiert, der eine durchgehende, gleichartige Sensorik und zumindest im zweiten Bereich der Bedienfläche ein durch die Scheibe sichtbares Anzeigeelement zugeordnet ist. Eine durchgehende transparente Scheibe schützt eine darunter liegende Sensorik und ein ebenfalls darunter liegendes Anzeigeelement, wie zum Beispiel ein LCD-Panel. Eine durchgehende Scheibe lässt die Bedienfläche der Bedieneinheit zudem auch funktional als Einheit erscheinen, so dass für den Benutzer die Zweiteilung der Bedienfläche in den ersten und zweiten Bereich nicht notwendig offenbar wird. Indem der durchgehenden, transparenten Scheibe eine durchgehende, gleichartige Sensorik zugeordnet ist, wirkt diese Sensorik in der gesamten Bedienfläche, also im ersten Bereich und im zweiten Bereich. Die Zuordnung der Sensorik zu der Scheibe besteht dabei darin, dass die Sensorik auf einer im montierten Zustand der Bedieneinheit innen liegenden, also von einem Benutzer abgewandten Seite der Scheibe liegt. Indem der Bedienfläche oder der diese bildenden Scheibe ein durch die Scheibe sichtbares Anzeigeelement, also zum Beispiel ein LCD-Panel, zugeordnet ist, besteht die Möglichkeit, im zweiten Bereich der Bedienfläche eine von einem Benutzer beeinflussbare Darstellung, also zum Beispiel Statusanzeigen, eine schematische Darstellung des jeweiligen Automatisierungsgeräts oder einzelner Funktionseinheiten des Automatisierungsgeräts und so weiter, einzublenden. Weil beide Bereiche der Bedienfläche, also auch der zweite Bereich der Bedienfläche, für Bedienhandlungen sensitiv sind, kann der Benutzer in diesem zweiten Bereich Bedienhandlungen vornehmen, die der Benutzer als Betätigung oder Beeinflussung dort graphisch dargestellter Einzelheiten wahrnimmt.

Wenn der Bedienfläche auch im ersten Bereich zumindest ein durch die Scheibe sichtbares Anzeigeelement zugeordnet ist, kann dieses zumindest eine Anzeigeelement zur Erzeugung einer bildlichen Darstellung einer Taste oder dergleichen verwendet werden. Für eine Darstellung einer Mehrzahl solcher Tasten kommt die Verwendung einer entsprechenden Mehrzahl von Anzeigeelementen, zum Beispiel jeweils ein LCD-Modul, in Betracht. Alternativ kann auch für die Darstellung einer Mehrzahl von Tasten ein einzelnes Anzeigeelement, also zum Beispiel ein LCD-Panel, verwendet werden.

Bei einer besonderen Ausführungsform ist auch die Variante möglich, dass für die Bedieneinheit genau ein Anzeigeelement, nämlich zum Beispiel ein LCD-Panel, verwendet wird, das abschnittsweise dem ersten und dem zweiten Bereich der Bedienfläche zugeordnet ist. Dies erleichtert die Herstellung und Wartung einer entsprechenden Bedieneinheit, indem diese auf wenige Grundelemente zurückgeführt ist, nämlich eine Sichtscheibe, eine darunter liegende, durchgehende Sensorik und ein nochmals darunter liegendes, durchgehendes Anzeigeelement.

Alternativ zu der Verwendung eines durch die Scheibe sichtbaren Anzeigeelements im ersten Bereich der Bedienfläche kommt auch eine Verwendung einer durch die Scheibe sichtbaren bedruckten oder geprägten Folie oder dergleichen im ersten Bereich der Bedienfläche in Betracht. Bei dieser Variante ist die Bedeutung der im ersten Bereich der Bedienfläche vorgesehenen Tasten durch die jeweilige Darstellung auf der Folie vorgegeben und damit nicht ohne einen Austausch der Folie änderbar. Gleichwohl lassen sich durch entsprechende Darstellungen auf der Folie besonders hochwertige und damit intuitiv verständliche Bildelemente verwenden. Zudem erlaubt die Verwendung einer solchen Folie im ersten Bereich der Bedienfläche ein insgesamt kleineres Anzeigeelement, bei dem es ausreicht, wenn dessen Dimensionen den Ausmaßen des zweiten Bereichs der Bedienfläche entsprechen.

Bei einer besonderen Ausführungsform einer Bedieneinheit mit entweder einer durch die Scheibe sichtbaren Folie im ersten Bereich der Bedienfläche oder zumindest einem durch die Scheibe sichtbaren Anzeigeelement im ersten Bereich der Bedienfläche ist vorgesehen, dass der Bedienfläche in deren erstem Bereich zumindest ein aktivierbares Leuchtmittel, zum Beispiel eine LED oder dergleichen, zugeordnet ist, die entweder eine Betätigung der dort dargestellten Tastatur, eine Betätigung einer dort dargestellten Taste oder einen Zustand einer dort dargestellten Taste durch einen entsprechenden Zustand des Leuchtmittels oder einen mit dem Leuchtmittel bewirkten Farbumschlag darstellt.

Bei einer Ausführungsform der Bedieneinheit wie hier und im Folgenden beschrieben fungiert als in beiden Bereichen der Bedienfläche gleichartige Sensorik zum Sensieren von Bedienhandlungen eine projiziert kapazitive Sensorik, wie sie in der oben genannten US 7,663,607 B beschrieben ist. Eine solche projiziert kapazitive Sensorik stellt eine mittlerweile ausgereifte Technologie dar. Mit einer solchen Sensorik lässt sich ein Ort einer jeweiligen Bedienhandlung vergleichsweise eindeutig bestimmen, weil die projiziert kapazitive Sensorik eine Vielzahl von matrixartig angeordneten und auf einem kapazitiven Wirkprinzip basierenden Sensorelementen umfasst, so dass bei einer Bedienhandlung einzelne dieser Sensorelemente aktiviert werden und entsprechende, positionsspezifische Signale resultieren, die für eine Ermittlung eines Orts der jeweiligen Bedienhandlung auswertbar sind.

Bei einer besonderen Ausführungsform der Bedieneinheit ist im Weiteren vorgesehen, dass diese eine Ein- und Ausgangsschnittstelle, eine Verarbeitungseinheit in Form von oder nach Art eines Mikroprozessors und einen Speicher aufweist. Mittels der Verarbeitungseinheit und einem von der Verarbeitungseinheit ausführbaren, in den Speicher ladbaren Steuerungsprogramm sind Bedienhandlungen in Bezug auf den ersten und den zweiten Bereich der Bedienfläche auswertbar. Schließlich sind Daten, die sensierte Bedienhandlungen kodieren, über die Ein- und Ausgangsschnittstelle übermittelbar. Die Bedieneinheit wird damit zu einer autarken Funktionseinheit, die über die Ein- und Ausgangsschnittstelle ansprechbar ist und über diese Daten liefert, die die jeweils sensierten Bedienhandlungen kodieren. Die Ein- und Ausgangsschnittstelle kann dabei eine serielle Schnittstelle, zum Beispiel eine USB-Schnittstelle sein, so dass die Bedieneinheit universell verwendbar ist. Neben der Ein- und Ausgangsschnittstelle wird für die Bedieneinheit dann lediglich noch eine Anschlussmöglichkeit an eine elektrische Energieversorgung benötigt.

Bei einer besonderen Ausführungsform einer Bedieneinheit mit einer solchen Ein- und Ausgangsschnittstelle ist der erste und/oder der zweite Bereich der Bedienfläche mittels Daten, die über die Ein- und Ausgangsschnittstelle in den Speicher der Bedieneinheit ladbar sind, parametrierbar. Auf diese Art und Weise können zum Beispiel die Ausmaße des ersten und/oder zweiten Bereichs der Bedienfläche oder weiterer Bereiche der Bedienfläche festgelegt werden. Des Weiteren kann der Ort der im ersten Bereich der Bedienfläche vorgesehenen Tasten parametriert werden, zum Beispiel indem zwei gegenüberliegende Eckpunkte eines rechteckigen Bereichs, welcher der Fläche der jeweiligen Taste entspricht, im Rahmen der Parametrierung vorgegeben werden. Des Weiteren kann im Rahmen der Parametrierung auch die Art der jeweiligen Taste und speziell auch ein bei einer Bedienhandlung in Bezug auf die Taste jeweils zurückzugebendes Datum oder eine zurückzugebende Datenfolge parametriert werden. Dies ermöglicht eine besonders große Flexibilität bei der Benutzung der Bedieneinheit. Die Parametrierung kann von einer einfachen Variante, bei der zum Beispiel eine Betätigung einer mit dem Buchstaben "A" beschrifteten Taste als Datum der Zahlenwert dieses Buchstabens im sogenannten ASCII-Code, also 65, zurückgegeben wird, zu komplexeren Szenarien reichen, bei denen zum Beispiel eine Bedienhandlung in Bezug auf eine Funktionstaste ein Datum oder eine Datenfolge zurückliefert, die einen größeren Informationsinhalt aufweist.

Insgesamt betrifft die Erfindung auch ein Automatisierungsgerät der eingangs genannten Art mit einer Bedien- und Anzeigeeinheit wie hier und nachfolgend beschrieben.

Zum Betrieb der Bedieneinheit ist ein in den Speicher der Bedieneinheit geladenes oder ladbares Steuerungsprogramm vorgesehen, wobei das Steuerungsprogramm Programmcodemittel zum Auswerten von Steuerungssignalen einer Sensorik einer Bedieneinheit wie hier und nachfolgend beschrieben, und Programmcodemittel zum Ableiten von Bedienhandlungen kodierenden Daten aus den Steuersignalen sowie Programmcodemittel zum Übermitteln der die Bedienhandlungen kodierenden Daten über eine von der Bedieneinheit umfasste Ein- und Ausgangsschnittstelle aufweist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten führen.

Es zeigen
- FIG 1: eine Bedien- und Anzeigeeinheit,
- FIG 2: eine Frontansicht einer Bedien- und Anzeigeeinheit gemäß FIG 1, und
- FIG 3: einzelne Funktionseinheiten der Bedien- und Anzeigeeinheit gemäß FIG 1.

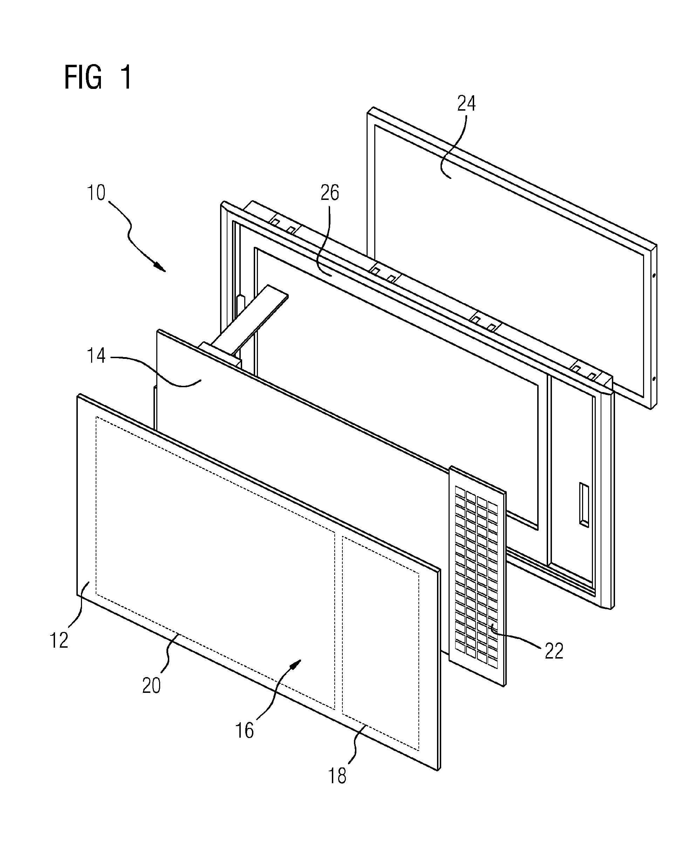

FIG 1 zeigt in einer Explosionsdarstellung wesentliche Komponenten einer im Folgenden kurz als Bedieneinheit 10 bezeichneten Bedien- und Anzeigeeinheit für ein selbst nicht dargestelltes Automatisierungsgerät, zum Beispiel eine numerisch gesteuerte Werkzeug- oder Bearbeitungsmaschine. Die Bedieneinheit 10 umfasst in einem schichtartigen Aufbau eine durchsichtige Scheibe 12, also zum Beispiel eine Glasscheibe oder dergleichen, und eine darunter liegende Sensorik 14.

Die Oberfläche der Scheibe 12 fungiert als Bedienfläche 16. Die Bedienfläche 16 umfasst zumindest einen ersten Bereich 18 und einen zweiten Bereich 20 und ist danach - zumindest logisch oder funktional - zumindest zweigeteilt. Die beiden Bereiche 18, 20 sind lediglich zur Darstellung von deren Position und Ausmaßen in FIG 1 mit gepunkteten Linien auf der Bedienfläche 16 dargestellt.

Der erste Bereich 18 der Bedienfläche 16 weist Tasten 22 auf, indem solche Tasten 22 in Form eines Teils der unterhalb der Bedienfläche 16 angeordneten Sensorik 14 realisiert und durch die als Bedienfläche 16 fungierende Scheibe 12 sichtbar sind. Im zweiten Bereich 20 der Bedienfläche 16 ist eine von einem Benutzer beeinflussbare Darstellung einblendbar. Dafür umfasst die Bedieneinheit 10 ein durch die Scheibe 12 sichtbares Anzeigeelement 24, also ein sogenanntes, an sich bekanntes LCD-Panel oder dergleichen.

Die Scheibe 12 und die Sensorik 14 werden auf einer Vorderseite einer Frontplatte 26 der Bedieneinheit 10 angebracht und das Anzeigeelement 24 komplettiert die Bedieneinheit 10 bei deren Anbringung an der Rückseite der Frontplatte 26. Die Bedieneinheit 10 kann in nicht dargestellter Weise auf der Rückseite der Frontplatte 26 noch mit einer Gehäuserückseite gekapselt sein. Weil die Bedieneinheit 10 normalerweise mit einem anderen Gerät, nämlich zum Beispiel einem Automatisierungsgerät oder dergleichen, für das sie als Bedien- und Anzeigeeinheit fungiert, kombiniert wird, ist eine solche Gehäuserückseite nicht in jedem Falle erforderlich.

Die in FIG 1 dargestellte Sensorik 14 ist eine flächige Sensorik, und eine Fläche der Sensorik 14 entspricht einer Fläche der Scheibe 12 und der dort gebildeten Bedienfläche 16. Nachdem sich die Sensorik 14 damit über die komplette Höhe und Breite der Bedienfläche 16 erstreckt, handelt es sich um eine durchgehende Sensorik 14, die, indem sie auf einem gleichen Wirkprinzip basiert, nämlich insbesondere einem kapazitiven Wirkprinzip, eine einerseits durchgehende und andererseits gleichartige Sensorik 14 darstellt.

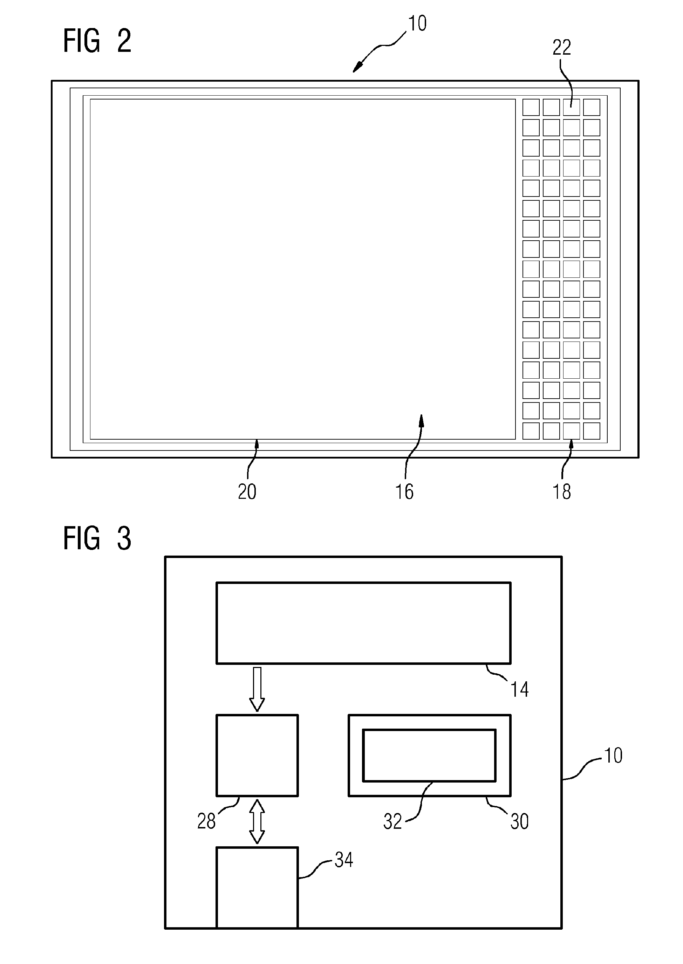

FIG 2 zeigt eine Ansicht der Bedieneinheit 10 im montierten Zustand und von vorne. Erkennbar ist, dass die Bedienfläche 16 in einem ersten, hier rechts dargestellten Bereich 18 Tasten 22 aufweist. Eine Beschriftung der Tasten 22 kann in Form einer zwischen die Scheibe 12 und die Sensorik 14 oder zwischen die Sensorik 14 und die Frontplatte 26 gelegten Folie realisiert sein. Abweichend zu der Ausführungsform in FIG 1 kann die Bedieneinheit 10 auch ein Anzeigeelement 24 in Form eines LCD-Panels oder dergleichen aufweisen, dessen Höhe und Breite der Höhe und Breite der Bedienfläche 16 entspricht, so dass die Tasten 22 auch mit dem Anzeigeelement 24 in üblicher Art und Weise darstellbar sind. Schließlich kann die Bedieneinheit 10 neben einem Anzeigeelement 24 für den zweiten Bereich auch ein separates Anzeigeelement, zum Beispiel in Form eines LCD-Panels oder dergleichen, aufweisen, das in seinen Abmessungen den Ausmaßen des ersten Bereichs 18 entspricht und mit dem dann im ersten Bereich 18 Tasten 22 darstellbar sind. Schließlich kann die Bedieneinheit auch eine Mehrzahl von Anzeigeelementen, zum Beispiel LCD-Module mit einer eher geringen Auflösung, zum Beispiel 40 x 50 Bildpunkte oder 100 x 100 Bildpunkte, umfassen, um im ersten Bereich 18 der Bedienfläche 16 Tasten 22 darzustellen. Für alle diese Varianten wird hier in der Beschreibung die Bezeichnung verwendet, dass der erste Bereich 18 der Bedienfläche 16 Tasten 22 aufweist.

FIG 3 zeigt eine schematisch vereinfachte Darstellung einzelner Funktionseinheiten der Bedieneinheit 10. Danach umfasst die Bedieneinheit 10 neben der Sensorik 14 eine Verarbeitungseinheit 28 in Form von oder nach Art eines Mikroprozessors sowie einen Speicher 30. In den Speicher 30 ist ein Steuerungsprogramm 32 geladen oder ladbar. Im Betrieb der Bedieneinheit 10 führt die Verarbeitungseinheit 28 das Steuerungsprogramm 32 aus. Mittels der Verarbeitungseinheit 28 werden entsprechend dem Steuerungsprogramm 32 etwaige Bedienhandlungen in Bezug auf den ersten und/oder den zweiten Bereich 18, 20 der Bedienfläche 16 ausgewertet. Dafür empfängt die Verarbeitungseinheit 28 von der Sensorik 14 entsprechende Steuersignale (in der Darstellung in FIG 3 durch den Blockpfeil angedeutet). Die Steuersignale kodieren den Ort einer etwaigen Bedienhandlung auf der Bedienfläche 16. Die Steuersignale sind damit als Positionsinformationen hinsichtlich einer Bedienhandlung auffassbar. Demnach sind die Steuersignale und die davon umfassten Positionsinformationen mittels der Verarbeitungseinheit 28 und unter Kontrolle des Steuerungsprogramms 32 interpretierbar, zum Beispiel als Bedienhandlung in Bezug auf eine Taste 22 im ersten Bereich 18 der Bedienfläche 16. Für eine solche Interpretation benötigt die Verarbeitungseinheit 28 Informationen über den Ort der Taste 22 und kann dann diese Ortsinformation mit der von den Steuersignalen direkt oder indirekt umfassten Positionsinformationen vergleichen. Bei einer Übereinstimmung oder einer zumindest ausreichenden Übereinstimmung ist eine Bedienhandlung in Bezug auf die Taste 22 erkannt. Auf diese Weise kann der Ort einer Mehrzahl von Tasten 22 des ersten Bereichs 18 der Bedienfläche 16 mit den aus den Steuersignalen der Sensorik 14 ableitbaren Positionsinformationen verglichen werden, um eine Tastatur mit einer Vielzahl von Tasten 22 zu realisieren.

Grundsätzlich genauso können Bedienhandlungen im zweiten Bereich 20 der Bedienfläche 16 interpretiert werden. Auch für Bedienhandlungen in einem dem zweiten Bereich 20 der Bedienfläche 16 zugeordneten Abschnitt der Sensorik 14 liefert diese Steuersignale, die von der Verarbeitungseinheit 28 unter Kontrolle des Steuerungsprogramms 32 auswertbar sind. Wenn im zweiten Bereich 20 der Bedienfläche 16 mittels des Anzeigeelements 24 zum Beispiel einzelne Funktionseinheiten eines Automatisierungsgeräts, zum Beispiel einer Werkzeugmaschine, gezeigt sind, liegt mit einer solchen Darstellung der Ort, an dem die Funktionseinheiten erscheinen, fest. Ähnlich wie oben für Bedienhandlungen in Bezug auf einzelne Tasten 22 kann nun durch Vergleich solcher Ortsinformation mit von der Sensorik erhaltenen Positionsinformationen ermittelt werden, ob etwa eine Bedienhandlung in Bezug auf eine Darstellung einer einzelnen Funktionseinheit der Werkzeugmaschine vorliegt. Wenn eine solche Bedienhandlung erkannt wird, kann dies beispielsweise eine vergrößerte Darstellung der Funktionseinheit, eine Anzeige von Statusinformationen zu der Funktionseinheit und so weiter auslösen. Andere Beispiele im Hinblick auf eine möglichst leistungsfähige und intuitiv zu bedienende Mensch-Maschine- Schnittstelle, die speziell im zweiten Bereich 20 der Bedienfläche 16 realisiert ist oder realisierbar ist, sind ebenfalls denkbar und dem Fachmann aus bisherigen Implementationen solcher Mensch-Maschine-Schnittstellen geläufig, bei denen eine Auswahl einer dargestellten Funktionseinheit zum Beispiel mit einer Zeigeeinrichtung und eine Vergrößerung oder eine Darstellung von Statusinformationen aus einem abrufbaren Kontextmenue auswählbar sind.

Eine besondere Möglichkeit zur Ausführung einer Mensch-Maschine- Schnittstelle besteht bei einer Bedieneinheit 10 mit einer beide Bereiche 18, 20 der Bedienfläche 16 erfassenden Sensorik 14 in Form einer projiziert kapazitiven Sensorik 14 darin, dass auch spezielle Bedienhandlungen erfassbar sind, die in der Fachterminologie als Multitouch bezeichnet werden. Multitouch bedeutet vereinfacht ausgedrückt die Auswertung gleichzeitiger oder quasi-gleichzeitiger Bedienhandlungen, also zum Beispiel einer mit zwei Fingern erfolgenden Bedienhandlung, wobei eine Berührung der Bedienfläche 16 durch jeden Finger erfasst und beide Berührungen und sukzessive erfolgenden Bewegungen die eigentliche Bedienhandlung darstellen. Auf diese Weise kann, wie dies zum Beispiel von den sogenannten Smartphones bekannt ist, durch Spreizen der Finger eine Ausschnittsvergrößerung einer Bildschirmdarstellung erzeugt oder abgerufen werden.

Dies ist auch im Zusammenhang mit einer zur Verwendung mit einem Automatisierungsgerät vorgesehenen Bedieneinheit 10 sinnvoll und es lassen sich unterschiedlichste Anwendungsszenarien denken. Bei einer Darstellung zum Beispiel einer Werkzeugmaschine mit davon umfassten Funktionseinheiten mittels des Anzeigeelements 24 kann zum Beispiel eine im zweiten Bereich 20 der Bedienfläche 16 im Bereich der Darstellung einer Funktionseinheit ausgeführte Bedienhandlung, die auch das Spreizen der zunächst dort aufgelegten Finger umfasst, eine vergrößerte Darstellung der jeweiligen Funktionseinheit oder eine Darstellung der Funktionseinheit mit weiteren funktionalen Einzelheiten aufrufen. Genauso ist mit einer anderen Multitouch- Bedienhandlung zum Beispiel eine Drehung einer Darstellung möglich, wie dies gegebenenfalls für eine geführte Inbetriebnahme oder eine geführte Fehlersuche sinnvoll ist. Eine in Form eines mehrfachen Antippens einer Stelle im zweiten Bereich 20 der Bedienfläche 16 ausgeführte Bedienhandlung kann nach Art eines sogenannten Doppelklicks ausgewertet werden und zum Beispiel weitere Informationen zu einer am Ort der Bedienhandlung dargestellten Funktionseinheit abrufen. Eine Bedienhandlung in Form eines längeren Verweilens an einer Stelle im zweiten Bereich 20 der Bedienfläche 16 kann ausgewertet werden, um ein Kontextmenue oder dergleichen zu einer am Ort der Bedienhandlung dargestellten Funktionseinheit abzurufen. Diese wenigen Beispiele kann der Fachmann in Kenntnis des hier vorgestellten Ansatzes ohne Weiteres sinnvoll ergänzen, um eine noch leistungsfähigere Mensch-Maschine-Schnittstelle zur Bedienung und/oder Überwachung des jeweiligen Automatisierungsgeräts, für das eine Bedieneinheit 10 wie hier beschrieben als Bedien- und Anzeigeeinheit fungiert, zu erhalten. Weil der Begriff Multitouch mitunter auch Geräte bezeichnet, die mit solchen Multitouch-Bedienhandlungen bedienbar sind, rechtfertigt sich insgesamt auch für die hier beschriebene Bedieneinheit 10 die Bezeichnung als Multitouch.

Damit sensierte Bedienhandlungen sich auch auf das jeweilige Automatisierungsgerät auswirken können, weist die Bedieneinheit 10 eine Ein- und Ausgangsschnittstelle 34, zum Beispiel in Form einer seriellen Schnittstelle, auf. Über die Ein- und Ausgangsschnittstelle 34 kann die Bedieneinheit 10, nämlich mittels der Verarbeitungseinheit 28 und unter Kontrolle des Steuerungsprogramms 32, Daten, die eine jeweilige Bedienhandlung kodieren, an eine externe Einheit, zum Beispiel eine Steuerungseinheit des Automatisierungsgeräts, senden. Bei den dabei übermittelten Daten kann es sich um ein einzelnes Datum oder eine Datenfolge handeln. Bei einer als Betätigung einer Taste 22 im ersten Bereich 18 der Bedienfläche identifizierten Bedienhandlung reicht zum Beispiel grundsätzlich eine Übermittlung eines Datums in Form eines die jeweilige Taste 22 bezeichnenden Codes aus. Der Code kann dann auf Seiten der externen Einheit ausgewertet werden und zum Beispiel das Ein- oder Ausschalten eines Aggregats der Werkzeugmaschine bewirken. Eine solche Auswertung kann grundsätzlich auch bereits durch die Verarbeitungseinheit 28 und das Steuerungsprogramm 32 der Bedieneinheit 10 erfolgen, so dass als die jeweilige Bedienhandlung kodierende Daten über die Ein- und Ausgangsschnittstelle 34 Steuerungsinformationen zum Ein- oder Ausschalten des jeweiligen Aggregats übermittelt werden. Umgekehrt können über die Ein- und Ausgangsschnittstelle 34 auch Daten an die Bedieneinheit 10 übermittelt werden, nämlich zum Beispiel Daten, die einen Ort und eine Größe des ersten und zweiten Bereichs 18, 20 der Bedienfläche 16 festlegen und/oder Daten, die einen Ort einer oder mehrerer Tasten 22 im ersten Bereich 18 der Bedienfläche 16 festlegen und so weiter. Solche Daten werden im Speicher 30 der Bedieneinheit 10 abgelegt und stehen dort zur Verarbeitung und Auswertung durch das Steuerungsprogramm 32 zur Verfügung. Die Ausgabe von Daten über die Ein- und Ausgangsschnittstelle 34 und die Übernahme von Daten in den Speicher 30 erfolgen mittels der Verarbeitungseinheit 28, wie dies in FIG 3 durch den beidseitigen Blockpfeil dargestellt ist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Angegeben werden eine kombinierte Bedien- und Anzeigeeinheit 10 für ein Automatisierungsgerät sowie ein Automatisierungsgerät mit einer solchen Bedien- und Anzeigeeinheit 10, wobei die Bedien- und Anzeigeeinheit 10 eine einen ersten und einen zweiten Bereich 18, 20 umfassende Bedienfläche 16 aufweist, wobei der erste Bereich 18 der Bedienfläche 16 Tasten 22 aufweist und im zweiten Bereich 20 der Bedienfläche 16 eine von einem Benutzer beeinflussbare Darstellung einblendbar ist und beide Bereiche 18, 20 der Bedienfläche 16 für Bedienhandlungen sensitiv sind.

## Patentansprüche

1. Kombinierte Bedien- und Anzeigeeinheit (10) für ein Automatisierungsgerät, wobei die Bedien- und Anzeigeeinheit (10) eine einen ersten und einen zweiten Bereich (18, 20) umfassende Bedienfläche (16) aufweist, wobei der erste Bereich (18) der Bedienfläche (16) Tasten (22) aufweist und im zweiten Bereich (20) der Bedienfläche (16) eine von einem Benutzer beeinflussbare Darstellung einblendbar ist,
**dadurch gekennzeichnet, dass** beide Bereiche (18, 20) der Bedienfläche (16) für Bedienhandlungen sensitiv sind.

2. Bedien- und Anzeigeeinheit (10) nach Anspruch 1, wobei beide Bereiche (18, 20) der Bedienfläche (16) eine gleichartige Sensorik (14) zum Sensieren von Bedienhandlungen aufweisen.

3. Bedien- und Anzeigeeinheit (10) nach Anspruch 1 oder 2, wobei als Bedienfläche (16) eine durchgehende, transparente Scheibe (12) fungiert, der eine durchgehende, gleichartige Sensorik (14) und zumindest im zweiten Bereich (20) der Bedienfläche (16) ein durch die Scheibe (12) sichtbares Anzeigeelement (24) zugeordnet ist.

4. Bedien- und Anzeigeeinheit (10) nach Anspruch 3, wobei der Bedienfläche (16) im ersten Bereich (18) zumindest ein durch die Scheibe (12) sichtbares Anzeigeelement (24) zugeordnet ist.

5. Bedien- und Anzeigeeinheit (10) nach Anspruch 3, wobei der Bedienfläche (16) im ersten Bereich (18) eine durch die Scheibe (12) sichtbare bedruckte oder geprägte Folie zugeordnet ist.

6. Bedien- und Anzeigeeinheit (10) nach einem der Ansprüche 3 bis 5, wobei der Bedienfläche (16) im ersten Bereich (18) der Bedienfläche (16) zumindest ein aktivierbares Leuchtmittel zugeordnet ist.

7. Bedien- und Anzeigeeinheit (10) nach einem der Ansprüche 2 bis 6, wobei als in beiden Bereichen (18, 20) der Bedienfläche (16) gleichartige Sensorik (14) zum Sensieren von Bedienhandlungen eine projiziert kapazitive Sensorik (14) fungiert.

8. Bedien- und Anzeigeeinheit (10) nach einem der vorangehenden Ansprüche mit einer Ein- und Ausgangsschnittstelle (34), einer Verarbeitungseinheit (28) und einem Speicher (30), wobei mittels der Verarbeitungseinheit (28) und einem von der Verarbeitungseinheit (28) ausführbaren, in den Speicher (30) ladbaren Steuerungsprogramm (32) Bedienhandlungen in Bezug auf den ersten und den zweiten Bereich (18, 20) der Bedienfläche (16) auswertbar sind und wobei sensierte Bedienhandlungen kodierende Daten über die Ein- und Ausgangsschnittstelle (34) übermittelbar sind.

9. Bedien- und Anzeigeeinheit (10) nach Anspruch 8, wobei der erste und/oder der zweite Bereich (18, 20) der Bedienfläche (16) mittels Daten, die über die Ein- und Ausgangsschnittstelle (34) in den Speicher (30) ladbar sind, parametrierbar ist.

10. Automatisierungsgerät mit einer Bedien- und Anzeigeeinheit (10) nach einem der vorangehenden Ansprüche.

11. Steuerungsprogramm (32) mit Programmcodemitteln, zum Auswerten von Steuerungssignalen einer Sensorik (14) einer Bedien- und Anzeigeeinheit (10) nach einem der Ansprüche 2 bis 9, zum Ableiten von Bedienhandlungen kodierenden Daten aus den Steuersignalen und zum Übermitteln der die Bedienhandlungen kodierenden Daten über eine von der Bedien- und Anzeigeeinheit (10) umfasste Ein- und Ausgangsschnittstelle (34).
